# EUROPÄISCHE PATENTSCHRIFT

(11) **EP 2 109 586 B1**
(45) Veröffentlichungstag und Bekanntmachung des Hinweises auf die Patenterteilung: **23.05.2012**
(21) Anmeldenummer: 07856599.1
(22) Anmeldetag: 12.12.2007
(51) Int. Cl.: C02F 1/02, C02F 103/14

(54) **VERFAHREN UND VORRICHTUNG ZUR BEHANDLUNG VON CYANID- UND/ODER KOMPLEXBILDNERHALTIGEN LÖSUNGEN**
METHOD AND DEVICE FOR THE TREATMENT OF SOLUTIONS COMPRISING CYANIDE AND/OR COMPLEXING AGENTS
PROCÉDÉ ET DISPOSITIF POUR TRAITER DES SOLUTIONS À TENEUR EN CYANURE ET/OU EN AGENTS COMPLEXANTS

(30) Priorität: 19.12.2006 DE 102006062387
(43) Veröffentlichungstag der Anmeldung: 21.10.2009
(73) Patentinhaber: WIELAND Edelmetalle GmbH, 75179 Pforzheim (DE)
(72) Erfinder: GUTEKUNST, Gerhard, 76228 Karlsruhe (DE); MZYK, Waldemar, 75365 Calw (DE)
(74) Vertreter: Patentanwälte Ruff, Wilhelm, Beier, Dauster & Partner
(86) Internationale Anmeldenummer: PCT/EP2007/010851
(87) Internationale Veröffentlichungsnummer: WO 2008/074426

(56) Entgegenhaltungen:
- EP-A- 0 325 720
- EP-A- 1 609 765
- DE-A1- 2 141 294
- DE-A1- 4 228 460
- US-A- 4 812 243
- US-A1- 2004 168 990

## Beschreibung

Die vorliegende Erfindung betrifft ein Verfahren zur Behandlung einer wässrigen, gegebenenfalls Schwer- und/oder Edelmetalle enthaltenden, cyanid- und/oder komplexbildnerhaltigen Lösung sowie eine Vorrichtung zur Durchführung eines solchen Verfahrens.

Cyanide, Schwermetalle und/oder Edelmetalle, insbesondere in komplexierter Form, beispielsweise als Cyanid-, EDTA-, NTA-, DTPA- und NTMP-Komplexe, sowie die entsprechenden Komplexbildner kommen häufig in Abwässern vor, wie sie beispielsweise in Scheideanstalten auftreten.

Aus Umweltschutzgründen können derartige Abwässer nicht ohne weiteres entsorgt werden. Die Aufarbeitung bzw. aufreinigende Behandlung solcher Abwässer steht deshalb bereits seit längerer Zeit im Fokus des Interesses. Eine solche Aufarbeitung sollte in jedem Fall den Abbau im Abwasser enthaltener Komplexbildner umfassen sowie insbesondere auch eine Cyanid-Entgiftung, sofern erforderlich. Darüber hinaus ist es insbesondere im Falle edelmetallhaltiger Abwässer natürlich wünschenswert, die enthaltenen Metalle aus dem Abwasser zurückzugewinnen, z. B. Gold aus Goldbädern.

Aus der EP 0 655 416 ist ein Verfahren zur Behandlung von Abwässern der oben genannten Art bekannt, bei dem Cyanide und Komplexbildner durch alkalische Hochtemperaturhydrolyse in einem Autoklaven unter Entwicklung von Ammoniumformiat abgebaut werden. Das in der EP 0 655 416 beschriebene Verfahren zeichnet sich dadurch aus, daß dem für die Hydrolyse verwendeten Autoklaven ein Regelkreis zugeordnet ist, wobei der Wasserdampf-Partialdruck in dem Autoklaven erfaßt und über ein steuerbares Auslaß-Regelventil derart konstant gehalten wird, daß nach Überschreiten eines der vorgegebenen Reaktionstemperatur entsprechenden Wasserdampf-Partialdruck-Sollwertes zur Druckminderung über das Auslaß-Regelventil Dampf abgelassen wird. In den behandelten Abwässern enthaltene Edel- und/oder Schwermetalle fallen bei der Hydrolyse als Niederschlag aus und können nach beendeter Reaktion vom Boden des Autoklaven entnommen werden.

In der EP 0 655 416 wird ein recht umfangreicher Überblick über den Stand der Technik betreffend die Behandlung von cyanidischen Abwässern gegeben. Erwähnenswert sind insbesondere die US-5,256,313, die US-5,160,637 und die DE 30 11 650.

In der US-5,256,313 wird eine Vorrichtung und ein Verfahren beschrieben, bei dem cyanidhaltiges Abwasser in einem geschlossenen Reaktor bei hohen Temperaturen behandelt wird, bis enthaltenes Cyanid im wesentlichen vollständig umgesetzt ist. Danach wird die Lösung abgekühlt und anschließend abgelassen.

In der US-5,160,637 wird die Behandlung cyanidhaltiger Abwässer in einem Durchflußreaktor bei erhöhter Temperatur beschrieben. Die cyanidhaltige Lösung wird durch einen im wesentlichen vertikal ausgerichteten, langgestreckten Reaktor geleitet, wobei die Flüssigkeit im Reaktor in rascher Bewegung gehalten wird. Enthaltenes Cyanid wird dabei zu ungiftigem und abbaubarem Ammoniumformiat hydrolysiert.

Die DE 30 11 650 beschäftigt sich unter dem Gesichtspunkt der Rückgewinnung von Gold aus Flüssigkeiten, die cyanidische Goldverbindungen enthalten, mit einem Verfahren, gemäß dem die Flüssigkeiten im alkalischen Medium auf Temperaturen um 170 °C erhitzt werden. Bei diesem Verfahren, welches in einem herkömmlichen Hochdruckreaktor erfolgt, wird unter anderem auch Ammoniak gebildet.

In der US 2004/0168990 A1 ist eine Einrichtung zur Behandlung von Klärschlämmen offenbart. Diese Einrichtung umfasst zwei in Reihe geschaltete Reaktoren zur Temperaturbehandlung der Schlämme, einen nachgeschalteten Tank für die Druckherabsetzung, sowie einen Wärmetauscher. Die Problematik der Behandlung cyanid- und/oder komplexhaltigen Lösungen ist in dieser Druckschrift nicht angesprochen.

Der vorliegenden Erfindung lag insbesondere die Aufgabe zugrunde, das in der EP 0 655 416 beschriebene Verfahren weiterzuentwickeln. Das bekannte Verfahren sollte vor allem unter energetischen Gesichtspunkten optimiert werden mit dem Ziel, die Wirtschaftlichkeit des Verfahrens zu erhöhen.

Diese Aufgabe wurde gelöst durch das Verfahren gemäß Anspruch 1 sowie die Vorrichtung gemäß Anspruch 13. Bevorzugte Ausführungsformen des erfindungsgemäßen Verfahrens finden sich in den Ansprüchen 2 bis 12. Eine bevorzugte Ausführungsform der erfindungsgemä-βen Vorrichtung ist in Anspruch 14 definiert. Durch Bezugnahme wird hiermit der Wortlaut sämtlicher Ansprüche zum Inhalt dieser Beschreibung gemacht.

Ein erfindungsgemäßes Verfahren eignet sich sowohl zur Behandlung einer wässrigen cyanidhaltigen als auch einer wässrigen komplexbildnerhaltigen Lösung. Vorzugsweise handelt es sich bei den Lösungen um alkalische Lösungen. Natürlich können auch Lösungen behandelt werden, die sowohl Cyanide als auch Komplexbildner enthalten. Insbesondere ist das erfindungsgemäße Verfahren auch zur Behandlung von schwer- und/oder edelmetallhaltigen Lösungen geeignet. Sind Schwer-und/oder Edelmetalle in der zu behandelnden Lösung enthalten, so liegen diese insbesondere in komplexierter Form vor.

Das erfindungsgemäße Verfahren umfasst eine Hochtemperaturbehandlung der Lösung in einem geschlossenen Reaktionsbehälter. Bei der Hochtemperaturbehandlung werden in der Lösung enthaltenes Cyanid, Komplexbildner und/oder metallische Komplexe mindestens teilweise, in einigen bevorzugten Ausführungsformen des erfindungsgemäßen Verfahrens auch vollständig, hydrolysiert.

Das erfindungsgemäße Verfahren zeichnet sich dadurch aus, daß nach der Hochtemperaturbehandlung nur ein Teil der behandelten Lösung aus dem Reaktionsbehälter abgelassen wird. Der abgelassene Teil wird anschließend mindestens teilweise, vorzugsweise vollständig, durch unbehandelte Lösung ersetzt. Die Mischung aus der neu zugeführten, unbehandelten Lösung und der im Reaktionsbehälter verbliebenen, bereits behandelten Lösung kann dann in einem weiteren Schritt wieder hochtemperaturbehandelt werden.

Zusätzlich zeichnet sich das erfindungsgemäße Verfahren insbesondere dadurch aus, daß nach der Hochtemperaturbehandlung der abgelassene Teil der behandelten Lösung oder auch die gesamte behandelte Lösung in einen dem Reaktionsbehälter nachgeordneten Speicherbehälter überführt und dann darin abgekühlt wird. Das Abkühlen erfolgt dabei insbesondere durch Ablassen von Dampf und gasförmigen Reaktionsprodukten aus dem Speicherbehälter.

Dieses Vorgehen steht im Gegensatz zu dem in der EP 0 655 416 beschriebenen Verfahren. Gemäß diesem werden wässrige, cyanid- und/oder komplexbildnerhaltige, gegebenenfalls Schwer- und/oder Edelmetalle enthaltende Lösungen in jedem Fall so lange in einem Reaktionsbehälter behandelt, bis die Umsetzung im wesentlichen vollständig abgeschlossen ist. Anschließend wird die behandelte Lösung im Reaktionsbehälter abgekühlt und erst dann abgelassen, wenn die Temperatur der Lösung einen bestimmten Wert unterschritten hat. Erst nach vollständigem Ablassen wird neue, unbehandelte Lösung in den Reaktionsbehälter eingefüllt. Der Reaktionsbehälter und die neue Lösung können dann wieder auf Reaktionstemperatur gebracht werden zur Durchführung einer weiteren Hochtemperaturbehandlung.

Das erfindungsgemäße Verfahren bietet dem gegenüber Vorteile in vielerlei Hinsicht. So ist das Verfahren insbesondere aus energetischer Sicht optimiert. Durch räumliche Trennung des eigentlichen Reaktions-und des Abkühlvorgangs steht die Restwärme des Reaktionsbehälters zur Erwärmung nachgeführter unbehandelter Lösung uneingeschränkt zur Verfügung. Das lediglich teilweise Ersetzen behandelter Lösung durch unbehandelte Lösung wirkt sich energetisch günstig aus. Die Restwärme des Reaktionsbehälters und die des im Reaktionsbehälter verbleibenden Teils der behandelten Lösung tragen dazu bei, daß die Mischung aus bereits behandelter und neu zugeführter unbehandelter Lösung nur von einem deutlich erhöhten Temperaturniveau aus auf die optimale Reaktionstemperatur gebracht werden muß. Die absoluten Temperaturschwankungen im Reaktionsbehälter zwischen zwei Hochtemperaturbehandlungen sind entsprechend deutlich geringer als gemäß dem in der EP 0 655 416 beschriebenen Verfahren.

Dies wirkt sich wiederum auch äußerst positiv auf die Lebensdauer des verwendeten Reaktionsbehälters aus, da starke Temperaturschwankungen durchaus zu einer schnellen Materialermüdung führen können.

In bevorzugten Ausführungsformen des erfindungsgemäßen Verfahrens werden der Dampf und die gasförmigen Reaktionsprodukte und/oder die abgekühlte Lösung zur Energierückgewinnung mindestens einem dem Speicherbehälter nachgeordneten Wärmetauscher zugeführt. Vorzugsweise werden Dampf und gasförmige Reaktionsprodukte einem Wärmetauscher zugeführt, über den unbehandelte Lösung vor dem Einführen in den Reaktionsbehälter vorgewärmt werden kann. Die Restwärme der abgekühlten Lösung kann gegebenenfalls über einen weiteren Wärmetauscher zurückgewonnen werden. Sie dient ebenfalls vorzugsweise zum Vorwärmen unbehandelter Lösung.

Es ist erfindungsgemäß bevorzugt, daß nach der Hochtemperaturbehandlung zwischen 5 % und 95 % der behandelten Lösung aus dem Reaktionsbehälter abgelassen werden. Besonders bevorzugt werden zwischen 25 % und 75 %, insbesondere ca. 50 %, aus dem Reaktionsbehälter abgelassen. Im letzteren Fall stellt sich beim vollständigen Ersetzen der abgelassenen 50 % der Lösung durch unbehandelte Lösung eine Temperatur im Reaktionsbehälter ein, die näherungsweise dem Mittelwert zwischen der Temperatur der unbehandelten und der Temperatur der im Reaktor verbleibenden Lösung entspricht.

Die Hochtemperaturbehandlung erfolgt vorzugsweise bei einer Temperatur zwischen 150 °C und 300 °C. In diesem Bereich ist eine Temperatur zwischen 220 °C und 260 °C weiter bevorzugt. Vorzugsweise wird die Hochtemperaturbehandlung bei einer Temperatur von ca. 240 °C durchgeführt. Grundsätzlich ist die exakte Temperatur unkritisch, es besteht allerdings ein Zusammenhang zwischen der gewählten Temperatur und der Geschwindigkeit der Umsetzung (Hydrolyse). Die Temperatur sollte daher in der Regel 150 °C nicht unterschreiten, da ansonsten die Umsetzung zu lange dauert. Je höher die Temperatur gewählt wird, desto höher ist auch der resultierende Druck in dem geschlossenen Reaktionsbehälter. Der Behälter muß entsprechend druckfest ausgelegt werden, was bei sehr hohen Drücken mit großen Kosten verbunden sein kann. Die Hochtemperaturbehandlung erfolgt daher in der Regel nicht oberhalb von 300 °C.

Vorzugsweise erfolgt die Hochtemperaturbehandlung bei einem Druck zwischen 5 bar und 90 bar, vorzugsweise zwischen 30 bar und 50 bar, insbesondere bei ca. 40 bar. Wie angesprochen steht der Druck dabei in der Regel in unmittelbarem Zusammenhang mit der gewählten Temperatur.

Wie ebenfalls bereits erwähnt wurde, wird in bevorzugten Ausführungsformen des erfindungsgemäßen Verfahrens die zu behandelnde Lösung vor Eintritt in den Reaktionsbehälter vorgewärmt. Dabei ist insbesondere eine Erwärmung auf eine Temperatur zwischen 120 °C und 180 °C bevorzugt. Besonders bevorzugt wird die Lösung auf eine Temperatur von ca. 150 °C vorgewärmt. Dies geschieht insbesondere mit Wärmeenergie, die mittels dem mindestens einen dem Reaktionsbehälter nachgeordneten Wärmetauscher rückgewonnen werden kann. Dabei handelt es sich insbesondere um die bereits angesprochenen Wärmetauscher, durch die Energie aus dem aus dem Speicherbehälter abgelassenen Dampf und den gasförmigen Reaktionsprodukten und/oder der aus dem Speicherbehälter abgelassenen, abgekühlten Lösung zurückgewonnen werden kann.

In besonders bevorzugten Ausführungsformen des erfindungsgemäßen Verfahrens wird der abgelassene Teil der behandelten Lösung mindestens einem weiteren Reaktionsbehälter zugeführt und in diesem nochmals hochtemperaturbehandelt. Der mindestens eine weitere Reaktionsbehälter ist dabei insbesondere vor dem Speicherbehälter angeordnet. Vorzugsweise ersetzt der abgelassene Teil der behandelten Lösung in dem mindestens einen weiteren Reaktionsbehälter ein entsprechendes Volumen an ebenfalls bereits behandelter Lösung.

In Ausführungsformen des erfindungsgemäßen Verfahrens mit mindestens einem weiteren Reaktionsbehälter ergeben sich aus energetischer Sicht ebenfalls große Vorteile. Die dem mindestens einen weiteren Reaktionsbehälter zugeführte Lösung weist bereits Reaktionstemperatur auf, so daß zum Erwärmen hier wesentlich weniger Energie aufgewendet werden muss als in dem vorgeschalteten Reaktionsbehälter, in dem die Lösung erstmals hochtemperaturbehandelt wird.

Es kann also von besonderem Vorteil sein, zwei oder mehr Reaktionsbehälter in Reihe anzuordnen, wobei in dem ersten Reaktionsbehälter in der Lösung enthaltene Cyanide und/oder Komplexbildner in der Regel nur teilweise hydrolysiert werden und die Hydrolyse dann in dem mindestens einen weiteren Reaktionsbehälter vervollständigt wird. Energie zum Erwärmen fällt dann überwiegend nur in dem ersten Reaktionsbehälter an, während in dem mindestens einen weiteren Reaktionsbehälter die Temperatur im wesentlichen nur gehalten werden muss.

Zum Erwärmen sind die Reaktionsbehälter vorzugsweise jeweils mit einer Heizeinrichtung versehen.

Es ist bevorzugt, daß die Lösung in dem Reaktionsbehälter sowie gegebenenfalls auch in dem mindestens einen weiteren Reaktionsbehälter und/oder in dem mindestens einen Speicherbehälter kontinuierlich durchmischt wird, insbesondere gerührt wird. Dadurch ist gewährleistet, daß in den Behältern eine homogene Temperaturverteilung erzielt wird und daß ausgefallene Feststoffe wie Schwer- oder Edelmetalle in Schwebe gehalten und mit der entgifteten Lösung ausgetragen werden können. Die ausgefallenen Feststoffe können dann insbesondere nach dem nachgeschalteten Speicherbehälter beispielsweise durch Filtration abgetrennt und gesammelt werden.

Als Reaktionsbehälter werden vorliegend vorzugsweise Autoklaven verwendet. Diese sind insbesondere in druckfester Ausführung aus Edelstahl gefertigt, um die bei der Hochtemperaturbehandlung auftretenden Drücke kompensieren zu können.

Vorzugsweise ist einem in einem erfindungsgemäßen Verfahren verwendbaren Reaktionsbehälter ein Regelkreis zugeordnet, wie er in der EP 0 655 416 beschrieben ist. Durch diesen kann der Dampfdruck in dem Autoklaven erfaßt werden und über ein steuerbares Auslaß-Regelventil derart konstant gehalten werden, daß nach Überschreiten einer definierten Druckdifferenz zwischen Reaktionsbehälter und Wasserreservoir zur Druckminderung über das Auslaß-Regelventil Dampf und/oder Gase abgelassen werden. Der abgelassenen Dampf bzw. die abgelassenen Gase können gegebenenfalls noch Verunreinigungen wie Cyanide enthalten. Abgelassene Gase werden vorzugsweise einer katalytischen Verbrennung zugeführt. Abgelassener Dampf kann kondensiert und mittelbar oder unmittelbar in einen Reaktionsbehälter zur weiteren Behandlung rückgeführt werden.

Als Speicherbehälter eignen sich insbesondere thermisch isolierte Behälter, so dass Wärme nicht unkontrolliert entweichen kann.

Der Speicherbehälter und der Reaktionsbehälter, gegebenenfalls auch der mindestens eine weitere Reaktionsbehälter, sind über Leitungen verbunden, die ebenfalls vorzugsweise thermisch isoliert sind. Alle Zu-und Ableitungen sind vorzugsweise mit Ventilen versehen, über die der Zulauf und der Ablauf der Lösung geregelt werden kann. Vorzugsweise sind alle Ventile steuerbar ausgestaltet, so dass das erfindungsgemäße Verfahren vollautomatisch durchführbar ist.

Besonders bevorzugt wird das erfindungsgemäße Verfahren quasikontinuierlich ausgeführt. Dies soll vorliegend bedeuten, daß in definierten Zeitabständen (nämlich jeweils nach einer Hochtemperaturbehandlung mit definierter Dauer) unbehandelte Lösung in den Reaktionsbehälter eingeführt wird, wo sie bereits behandelte Lösung ersetzt, welche dann wiederum mittelbar oder unmittelbar in den Speicherbehälter überführt wird oder welche gegebenenfalls vor Überführung in den Speicherbehälter in mindestens einen weiteren Reaktionsbehälter überführt wird und dort ebenfalls bereits behandelte Lösung ersetzt und all diese Vorgänge kontinuierlich wiederholt werden.

In einer besonders bevorzugten Ausführungsform eines erfindungsgemäßen Verfahrens zur Behandlung einer wässrigen, gegebenenfalls Schwer- und/oder Edelmetalle enthaltenden, cyanid- und/oder komplexbildnerhaltigen Lösung wird die Lösung in zwei oder mehr in Reihe angeordneten, geschlossenen Reaktionsbehältern hochtemperaturbehandelt. Nach der Hochtemperaturbehandlung wird aus jedem der mindestens zwei Reaktionsbehälter ein Teil der behandelten Lösung abgelassen, wobei der abgelassene Teil durch unbehandelte Lösung oder behandelte Lösung aus dem vorgeordneten Reaktionsbehälter ersetzt wird. Anschließend folgt dann ein weiterer Hochtemperaturbehandlungsschritt, wobei die Einzelschritte, wie oben erwähnt, vorzugsweise kontinuierlich wiederholt werden.

In dieser Ausführungsform ist es bevorzugt, daß der abgelassene Teil der behandelten Lösung aus dem letzten Reaktionsbehälter der Reihe in einen nachgeordneten Speicherbehälter überführt und darin abgekühlt wird. Dies geschieht, wie oben erwähnt, insbesondere durch Ablassen von Dampf und gasförmigen Reaktionsprodukten aus dem Speicherbehälter. Diese können in einem weiteren Schritt zur Energierückgewinnung mindestens einem dem Speicherbehälter nachgeordneten Wärmetauscher zugeführt werden. Bevorzugte Ausführungsformen der einzelnen Verfahrensschritte wurden oben bereits beschrieben. Auf die entsprechenden Ausführungen wird ausdrücklich Bezug genommen und verwiesen.

Ebenfalls Gegenstand der vorliegenden Erfindung ist eine Vorrichtung zur Durchführung eines Verfahrens, wie es oben bereits ausführlich beschrieben wurde. Eine erfindungsgemäße Vorrichtung umfaßt mindestens einen, insbesondere jedoch mindestens zwei in Reihe geschaltete Reaktionsbehälter zur Durchführung einer Hochtemperaturbehandlung. Darüber hinaus umfaßt eine erfindungsgemäße Vorrichtung mindestens einen dem oder den Reaktionsbehälter(n) nachgeordneten Speicherbehälter, welcher einen Auslaß für Dampf und gasförmige Reaktionsprodukte aufweist, sowie insbesondere mindestens einen Wärmetauscher, der dem Speicherbehälter nachgeordnet ist. Bevorzugte Ausführungsformen der einzelnen Komponenten wurden oben bereits detailliert beschrieben.

Bei der erfindungsgemäßen Vorrichtung ist dem Speicherbehälter au-βerdem eine Ammoniumrückgewinnungsanlage nachgeordnet. In dieser kann Ammoniak, der aus dem Speicherbehälter abgelassen wird, absorbiert und zwecks späterer Weiterverwertung gesammelt werden.

Wie bereits erwähnt wurde, weisen die Reaktionsbehälter und/oder der Speicherbehälter vorzugsweise Mittel zur kontinuierlichen Durchmischung der jeweils enthaltenen Lösung auf. Bei den Mitteln zur kontinuierlichen Durchmischung handelt es sich insbesondere um Rührer.

Weitere Merkmale der Erfindung ergeben sich aus der nachfolgenden Beschreibung einer bevorzugten Ausführungsform des erfindungsgemäßen Verfahrens sowie der erfindungsgemäßen Vorrichtung und der Abbildung in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

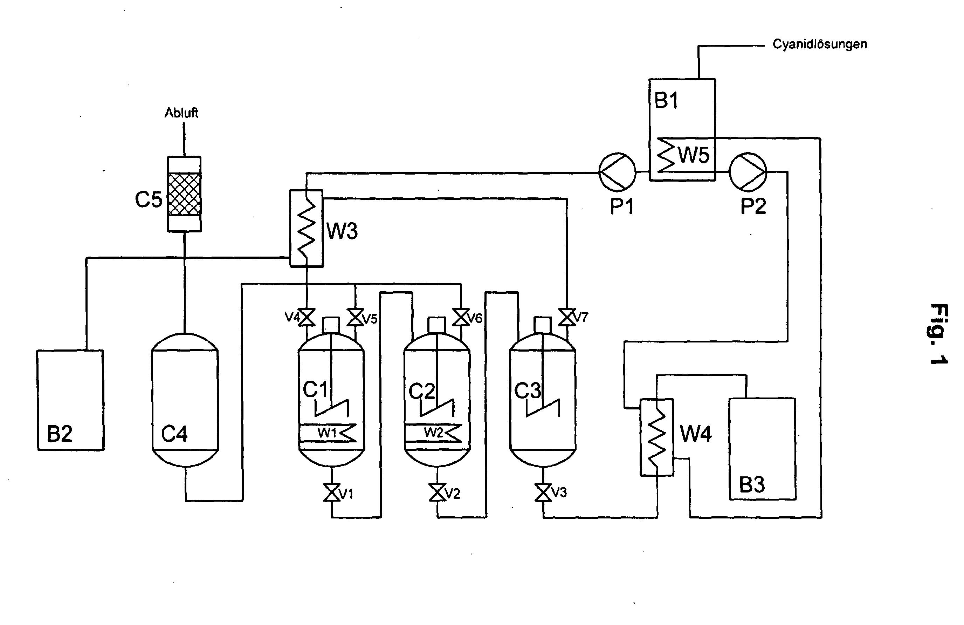

Fig. 1 zeigt eine blockschaltbildartige Darstellung einer bevorzugten Ausführungsform einer erfindungsgemäßen Vorrichtung. In der Figur sind schematisch dargestellt:
- B1 Vorlagebehälter zur Speicherung einer zu behandelnden cyanidhaltigen Lösung
- C1 Reaktionsbehälter für eine erste Hochtemperaturbehandlung der cyanidhaltigen Lösung
- C2 Weiterer Reaktionsbehälter zur Durchführung einer zweiten Hochtemperaturbehandlung
- C3 Speicherbehälter, in dem in den Reaktionsbehältern C1 und C2 behandelte Lösung abgekühlt wird
- B2 Sammelbehälter für gasförmige Reaktionsprodukte und Dampf (in kondensierter Form), welche aus dem Speicherbehälter C3 abgelassen werden
- B3 Sammelbehälter für behandelte (entgiftete) Lösung, die aus dem Speicherbehälter C3 abgelassen wurde
- W1 Heizung im Reaktionsbehälter C1
- W2 Heizung im Reaktionsbehälter C2
- W3 Dem Speicherbehälter C3 nachgeordneter Wärmetauscher zur Verwertung von Restwärme der aus dem Speicherbehälter C3 abgelassenen gasförmigen gasförmigen Reaktionsprodukte sowie insbesondere des Dampfes aus C3, wobei mit der Restwärme die aus dem Vorlagebehälter B1 stammende, zu behandelnde cyanidhaltige Lösung vor dem Einfüllen in den Reaktionsbehälter C1 vorgewärmt wird
- W4 Weiterer dem Speicherbehälter C3 nachgeordneter Wärmetauscher zur Verwertung von Restwärme der aus dem Speicherbehälter C3 abgelassenen behandelten (entgifteten) Lösung
- W5 Wärmetauscher, in dem im Vorlagebehälter B1 gespeicherte cyanidhaltige Lösung vorgewärmt werden kann
- P1 Pumpe zur Überführung unbehandelter Cyanidlösung aus dem Vorlagebehälter B1 in den Reaktionsbehälter C1
- P2 Pumpe zwischen den Wärmetauschern W4 und W5
- V1-V7 Ventile
- C4 Sammelbehälter, in dem aus den Reaktionsbehältern C1 und C2 über ein Auslaßregelventil (V5 und V6) abgelassene Gase und abgelassener Dampf zwischengespeichert werden können
- C5 Verbrennungskatalysator, in dem Gase aus C4 rückstandsfrei verbrannt werden können

Anhand von **Fig. 1** lässt sich die Durchführung eines erfindungsgemä-βen Verfahrens wie folgt beschreiben:

Mittels der Hochdruckpumpe **P1** wird auf 80 bis 90 °C vorgewärmtes, cyanidhaltiges Abwasser aus dem Vorlagebehälter **B1** über den Wärmetauscher **W3** in den Reaktionsbehälter **C1** überführt. Im Wärmetauscher **W3** wird das cyanidhaltige Abwasser auf ca. 150 °C vorgewärmt, so daß im Reaktionsbehälter **C1** die Hydrolysereaktion schnellstmöglich beginnen kann. Durch die Heizung **W1** im Reaktionsbehälter **C1** wird das cyanidhaltige Abwasser auf ca. 240 °C erwärmt. Dabei wird der Druck im Reaktionsbehälter reguliert, wie es in der EP 0 655 416 beschrieben ist. Im Reaktionsbehälter **C1** findet die Hauptumsetzung der im Abwasser enthaltenen Cyanide statt. Entstehende Gase werden wie in der EP 0 655 416 beschrieben abgeleitet und ausgewaschen. Insbesondere werden sie dem Sammelbehälter **C4** zugeführt und über diesen dem Verbrennungskatalysator **C5,** in dem die Gase rückstandsfrei verbrannt werden können.

Nach Ablauf der Hauptreaktion wird das Ventil **V1** geöffnet, woraufhin die Hälfte des Inhaltes des Reaktionsbehälters **C1** durch den im Reaktionsbehälter entstandenen Überdruck in den Reaktionsbehälter **C2** befördert wird (aus dem Reaktionsbehälter **C2** wird zuvor gegebenenfalls ein entsprechendes Volumen an behandelter Lösung abgelassen). Das freigewordene Volumen im Reaktionsbehälter **C1** wird mittels der Hochdruckpumpe **P1** über den Wärmetauscher **W3** wieder mit auf 150 °C vorgeheiztem Cyanidabwasser aufgefüllt. Die Temperatur im Reaktionsbehälter **C1** sinkt dabei auf eine mittlere Temperatur von ca. 190 °C bis 200 °C ab. Durch die Heizung **W1** kann die Temperatur schnell wieder auf 240 °C erhöht werden.

Im Reaktionsbehälter **C2** wird durch die Heizung **W2** die Temperatur für weitere mindestens 1,5 Stunden auf 240 °C gehalten. Die Druckregulierung findet wiederum wie in der EP 0 655 416 beschrieben statt. Danach ist die Reaktion abgeschlossen, und die Hälfte des Inhaltes des Reaktionsbehälters **C2** wird nach Öffnen des Ventils **V2** in Folge des durch den im Reaktionsbehälter **C2** entstandenen Überdrucks in den Speicherbehälter **C3** überführt.

Durch Öffnen des Ventils **V7** am Speicherbehälter **C3** wird ein Teil des Inhalts des Speicherbehälters **C3** abdestilliert (als Dampf abgelassen), bis sich der Restinhalt des Speicherbehälters **C3** dadurch auf ca. 150 °C abgekühlt hat. Die Dampfphase wird im Wärmetauscher **W3** abgekühlt und gibt ihre Kondensationsenthalpie an das gleichzeitig über den Wärmetauscher **W3** geleitete cyanidhaltige Abwasser, mit dem der Reaktionsbehälter **C1** befüllt wird, ab. Das Kondensat ist eine relativ saubere Ammoniaklösung, die zur weiteren Verwendung im Sammelbehälter **B2** aufgenommen wird. Der restliche Inhalt des Speicherbehälters **C3** (die auf ca. 150 °C abgekühlte behandelte Lösung) wird durch Öffnen des Ventils **V3** über den Wärmetauscher **W4,** über den die Restwärme des Inhalts über den Wärmetauscher **W5** an den Inhalt des Vorlagebehälters **B1** oder an andere Verbraucher weitergegeben werden kann, in den Sammelbehälter **B3** entleert. '

Danach wird der Speicherbehälter **C3** wieder mit der Hälfte des Inhalts des Reaktionsbehälters **C2** befüllt, der Reaktionsbehälter **C2** wird seinerseits wieder mit der Hälfte des Inhalts des Reaktionsbehälters **C1** befüllt und der Reaktionsbehälter **C1** wiederum mit unbehandelter Lösung aus dem Vorlagebehälter **B1.** Daraufhin kann der Zyklus von neuem beginnen.

## Patentansprüche

1. Verfahren zur Behandlung einer wässrigen, gegebenenfalls Schwer- und/oder Edelmetalle enthaltenden, cyanid- und/oder komplexbildnerhaltigen Lösung, umfassend eine Hochtemperaturbehandlung der Lösung in einem geschlossenen Reaktionsbehälter, **dadurch gekennzeichnet, dass** nach der Hochtemperaturbehandlung ein Teil der behandelten Lösung aus dem Reaktionsbehälter abgelassen wird, der abgelassene Teil mindestens teilweise durch unbehandelte Lösung ersetzt wird und diese mit dem im Reaktionsbehälter verbliebenen Teil der behandelten Lösung hochtemperaturbehandelt wird.

2. Verfahren nach Anspruch 1, **dadurch gekennzeichnet, dass** nach der Hochtemperaturbehandlung die behandelte Lösung oder der abgelassene Teil der behandelten Lösung in einen dem Reaktionsbehälter nachgeordneten Speicherbehälter überführt und darin abgekühlt wird, indem Dampf und gasförmige Reaktionsprodukte aus dem Speicherbehälter abgelassen werden, wobei vorzugsweise der Dampf und die gasförmige Reaktionsprodukte und/oder die abgekühlte Lösung zur Energierückgewinnung mindestens einem dem Speicherbehälter nachgeordneten Wärmetauscher zugeführt wird.

3. Verfahren nach einem der vorhergehenden Ansprüche, **dadurch gekennzeichnet, dass** nach der Hochtemperaturbehandlung zwischen 5 % und 95 %, vorzugsweise zwischen 25 % und 75 %, insbesondere ca. 50 %, der behandelten Lösung aus dem Reaktionsbehälter abgelassen werden.

4. Verfahren nach einem der vorhergehenden Ansprüche, **dadurch gekennzeichnet, dass** die Hochtemperaturbehandlung bei einer Temperatur zwischen 150 °C und 300 °C, vorzugsweise zwischen 220 °C und 260 °C, insbesondere bei ca. 240 °C, erfolgt.

5. Verfahren nach einem der vorhergehenden Ansprüche, **dadurch gekennzeichnet, dass** die Hochtemperaturbehandlung bei einem Druck zwischen 5 bar und 90 bar, vorzugsweise zwischen 30 bar und 50 bar, insbesondere bei ca. 40 bar, erfolgt.

6. Verfahren nach einem der vorhergehenden Ansprüche, **dadurch gekennzeichnet, dass** die zu behandelnde Lösung vor Eintritt in den Reaktionsbehälter vorgewärmt wird, insbesondere auf eine Temperatur zwischen 120 °C und 180 °C, insbesondere auf ca. 150 °C, wobei vorzugsweise die zu behandelnde Lösung mit Energie vorgewärmt wird, die mittels mindestens einem dem Reaktionsbehälter nachgeordneten Wärmetauscher, insbesondere mittels dem mindestens einen dem Speicherbehälter nachgeordneten Wämetauscher, rückgewonnen wird.

7. Verfahren nach einem der vorhergehenden Ansprüche, **dadurch gekennzeichnet, dass** der abgelassene Teil der behandelten Lösung mindestens einem weiteren Reaktionsbehälter, der insbesondere vor dem Speicherbehälter angeordnet ist, zugeführt wird und in diesem nochmals hochtemperaturbehandelt wird, wobei vorzugsweise der abgelassene Teil der behandelten Lösung in dem mindestens einen weiteren Reaktionsbehälter darin bereits behandelte Lösung mindestens teilweise ersetzt.

8. Verfahren nach einem der vorhergehenden Ansprüche, **dadurch gekennzeichnet, dass** die Lösung in dem Reaktionsbehälter sowie ggf. in dem mindestens einen weiteren Reaktionsbehälter und/oder in dem Speicherbehälter kontinuierlich durchmischt, insbesondere gerührt, wird.

9. Verfahren nach einem der vorhergehenden Ansprüche, **dadurch gekennzeichnet, dass** als Reaktionsbehälter ein Autoklav verwendet wird.

10. Verfahren nach einem der vorhergehenden Ansprüche, **dadurch gekennzeichnet, dass** es quasikontinuierlich ausgeführt wird.

11. Verfahren nach einem der vorhergehenden Ansprüche, wobei die Lösung in mindestens zwei in Reihe angeordneten, geschlossenen Reaktionsbehältern hochtemperaturbehandelt wird, nach der Hochtemperaturbehandlung aus jedem der mindestens zwei Reaktionsbehälter ein Teil der behandelten Lösung abgelassen wird, der abgelassene Teil durch unbehandelte Lösung oder behandelte Lösung aus dem vorgeordneten Reaktionsbehälter ersetzt wird und die Hochtemperaturbehandlung wiederholt wird.

12. Verfahren nach Anspruch 11, **dadurch gekennzeichnet, dass** der abgelassene Teil der behandelten Lösung aus dem letzten Reaktionsbehälter der Reihe in einen nachgeordneten Speicherbehälter überführt und darin abgekühlt wird, indem Dampf und gasförmige Reaktionsprodukte aus dem Speicherbehälter abgelassen werden und der Dampf und die gasförmigen Reaktionsprodukte und/oder die abgekühlte Lösung zur Energierückgewinnung mindestens einem dem Speicherbehälter nachgeordneten Wärmetauscher zugeführt wird.

13. Vorrichtung zur Durchführung eines Verfahrens nach einem der vorhergehenden Ansprüche, umfassend mindestens einen, insbesondere zwei in Reihe geschaltete, geschlossene Reaktionsbehälter zur Durchführung der Hochtemperaturbehandlung, mindestens einen dem oder den Reaktionsbehältern nachgeordneten Speicherbehälter mit einem Auslass für Dampf und gasförmige Reaktionsprodukte, mindestens einen Wärmetauscher, der dem Speicherbehälter nachgeordnet ist, wobei dem Speicherbehälter eine Ammoniumrückgewinnungsanlage nachgeordnet ist.

14. Vorrichtung nach Anspruch 13, **dadurch gekennzeichnet**, der mindestens eine Reaktionsbehälter und/oder der mindestens eine Speicherbehälter Mittel zur kontinuierlichen Durchmischung, insbesondere Rührer, aufweisen.

## Claims

1. Method of treating an aqueous cyanide- and/or complexing-agent-containing solution, possibly containing heavy and/or precious metals, comprising a high-temperature treatment of the solution in a closed reaction vessel, **characterized in that**, following the high-temperature treatment, some of the treated solution is discharged from the reaction vessel, the discharged fraction is at least partially replaced by untreated solution and the latter is subjected to high-temperature treatment along with the treated-solution fraction remaining in the reaction vessel.

2. Method according to Claim 1, **characterized in that**, following the high-temperature treatment, the treated solution or the discharged fraction of the treated solution is transferred into a storage tank arranged downstream of the reaction vessel and is cooled therein, steam and gaseous reaction products being discharged from the storage tank, wherein the steam and the gaseous reaction products and/or the cooled solution, for energy recovery, are/is preferably fed to at least one heat exchanger arranged downstream of the storage tank.

3. Method according to one of the preceding claims, **characterized in that**, following the high-temperature treatment, between 5% and 95%, preferably between 25% and 75%, in particular approximately 50%, of the treated solution is discharged from the reaction vessel.

4. Method according to one of the preceding claims, **characterized in that** the high-temperature treatment takes place at a temperature between 150°C and 300°C, preferably between 220°C and 260°C, in particular at approximately 240°C.

5. Method according to one of the preceding claims, **characterized in that** the high-temperature treatment takes place at a pressure between 5 bar and 90 bar, preferably between 30 bar and 50 bar, in particular at approximately 40 bar.

6. Method according to one of the preceding claims, **characterized in that** the solution which is to be treated, prior to entering into the reaction vessel, is preheated, in particular to a temperature between 120°C and 180°C, in particular to approximately 150°C, wherein the solution which is to be treated is preferably preheated by way of energy which is recovered by means of at least one heat exchanger arranged downstream of the reaction vessel, in particular by means of the at least one heat exchanger arranged downstream of the storage tank.

7. Method according to one of the preceding claims, **characterized in that** the discharged fraction of the treated solution is fed to at least one further reaction vessel, which is arranged, in particular, upstream of the storage tank, and is subjected to further high-temperature treatment therein, wherein the discharged fraction of the treated solution, in the at least one further reaction vessel, preferably at least partially replaces the solution which has already been treated therein.

8. Method according to one of the preceding claims, **characterized in that** the solution in the reaction vessel and possibly in the at least one further reaction vessel and/or in the storage tank is continuously mixed, in particular agitated.

9. Method according to one of the preceding claims, **characterized in that** the reaction vessel used is an autoclave.

10. Method according to one of the preceding claims, **characterized in that** it is executed quasicontinuously.

11. Method according to one of the preceding claims, **characterized in that** the solution is subjected to high-temperature treatment in at least two closed reaction vessels arranged in series, some of the treated solution is discharged, following the high-temperature treatment, from each of the at least two reaction vessels, the discharged fraction is replaced by untreated solution or treated solution from the upstream reaction vessel, and the high-temperature treatment is repeated.

12. Method according to Claim 11, **characterized in that** the discharged fraction of the treated solution from the final reaction vessel of the series is transferred into a downstream storage tank and is cooled therein, steam and gaseous reaction products being discharged from the storage tank, and the steam and gaseous reaction products and/or the cooled solution, for energy recovery, being fed to at least one heat exchanger arranged downstream of the storage tank.

13. Apparatus for implementing a method according to one of the preceding claims, comprising at least one, in particular two series-connected, closed reaction vessels for carrying out the high-temperature treatment, also comprising at least one storage tank which is arranged downstream of the reaction vessel or vessels and has an outlet for steam and gaseous reaction products, further comprising at least one heat exchanger arranged downstream of the storage tank, wherein an ammonium-recovery installation is arranged downstream of the storage tank.

14. Apparatus according to Claim 13, **characterized in that** the at least one reaction vessel and/or the at least one storage tank have/has continuous-mixing means, in particular agitators.

## Revendications

1. Procédé pour traiter une solution aqueuse contenant des cyanures et/ou des agents complexants et contenant éventuellement des métaux lourds et/ou nobles, comprenant un traitement à haute température de la solution dans un récipient de réaction fermé, **caractérisé en ce qu'**après le traitement à haute température, on soutire une partie de la solution traitée hors du récipient de réaction, on remplace la partie soutirée au moins en partie par de la solution non traitée, et on traite celle-ci à haute température avec la partie de la solution traitée restant dans le récipient de réaction.

2. Procédé selon la revendication 1, **caractérisé en ce qu'**après le traitement à haute température, on transfère la solution traitée ou la partie soutirée de la solution traitée dans un récipient d'accumulation disposé en aval du récipient de réaction et on l'y refroidit, en extrayant de la vapeur et des produits de réaction gazeux hors du récipient d'accumulation, dans lequel on envoie de préférence la vapeur et les produits de réaction gazeux et/ou la solution refroidie à au moins un échangeur de chaleur disposé en aval du récipient d'accumulation pour récupérer de l'énergie.

3. Procédé selon l'une quelconque des revendications précédentes, **caractérisé en ce qu'**après le traitement à haute température, on soutire entre 5 % et 95 %, de préférence entre 25 % et 75 %, en particulier environ 50%, de la solution traitée hors du récipient de réaction.

4. Procédé selon l'une quelconque des revendications précédentes, **caractérisé en ce que** l'on effectue le traitement à haute température à une température comprise entre 150°C et 300°C, de préférence entre 220°C et 260°C, en particulier à environ 240°C.

5. Procédé selon l'une quelconque des revendications précédentes, **caractérisé en ce que** l'on effectue le traitement à haute température à une pression comprise entre 5 bar et 90 bar, de préférence entre 30 bar et 50 bar, en particulier à environ 40 bar.

6. Procédé selon l'une quelconque des revendications précédentes, **caractérisé en ce que** l'on préchauffe la solution à traiter avant son entrée dans le récipient de réaction, en particulier à une température comprise entre 120°C et 180°C, en particulier à environ 150°C, dans lequel on préchauffe la solution à traiter de préférence avec une énergie, qui est récupérée au moyen d'au moins un échangeur de chaleur disposé en aval du récipient de réaction, en particulier au moyen dudit au moins un échangeur de chaleur disposé en aval du récipient d'accumulation.

7. Procédé selon l'une quelconque des revendications précédentes, **caractérisé en ce que** l'on envoie la partie soutirée de la solution traitée à au moins un autre récipient de réaction, qui est disposé en particulier avant le récipient d'accumulation, et on la traite de nouveau à haute température dans celui-ci, dans lequel la partie soutirée de la solution traitée remplace de préférence au moins en partie la solution déjà traitée dans ledit au moins un autre récipient de réaction.

8. Procédé selon l'une quelconque des revendications précédentes, **caractérisé en ce que** l'on mélange en continu, en particulier on agite, la solution dans le récipient de réaction ainsi qu'éventuellement dans ledit au moins un autre récipient de réaction et/ou dans le récipient d'accumulation.

9. Procédé selon l'une quelconque des revendications précédentes, **caractérisé en ce que** l'on utilise un autoclave comme récipient de réaction.

10. Procédé selon l'une quelconque des revendications précédentes, **caractérisé en ce qu'**on l'exécute de manière quasiment continue.

11. Procédé selon l'une quelconque des revendications précédentes, **caractérisé en ce que** l'on traite la solution à haute température dans au moins deux récipients de réaction fermés disposés en série, on soutire après le traitement à haute température au moins une partie de la solution traitée hors de chacun des au moins deux récipients de réaction, on remplace la partie soutirée par de la solution non traitée ou de la solution traitée provenant du récipient de réaction disposé en amont et on répète le traitement à haute température.

12. Procédé selon la revendication 11, **caractérisé en ce que** l'on transfère la partie soutirée de la solution traitée hors du dernier récipient de réaction de la série dans un récipient d'accumulation disposé en aval et on l'y refroidit, en extrayant de la vapeur et des produits de réaction gazeux hors du récipient d'accumulation et on envoie la vapeur et les produits de réaction gazeux et/ou la solution refroidie à au moins un échangeur de chaleur disposé en aval du récipient d'accumulation, pour récupérer de l'énergie.

13. Dispositif pour la mise en oeuvre d'un procédé selon l'une quelconque des revendications précédentes, comprenant au moins un, en particulier deux récipient(s) de réaction fermé(s) connecté(s) en série pour la mise en oeuvre du traitement à haute température, au moins un récipient d'accumulation disposé en aval du ou des récipient(s) de réaction avec une sortie pour la vapeur et les produits de réaction gazeux, au moins un échangeur de chaleur, qui est disposé en aval du récipient d'accumulation, dans lequel une installation de récupération d'ammonium est disposée en aval du récipient d'accumulation.

14. Dispositif selon la revendication 13, **caractérisé en ce que** ledit au moins un récipient de réaction et/ou ledit au moins un récipient d'accumulation présentent des moyens pour effectuer un mélange continu, en particulier un agitateur.
